# EUROPEAN PATENT APPLICATION

(11) **EP 4 675 689 A1**
(43) Date of publication of application: **07.01.2026**
(21) Application number: 24186189.7
(22) Date of filing: 03.07.2024
(51) Int. Cl.: H01M 4/04, H01B 1/24, H01M 4/131, H01M 4/1391, H01M 4/62, H01M 10/0525

(54) **COMPOSITION FOR USE IN MANUFACTURING OF BATTERIES**

(71) Applicant: Elantas GmbH, 46483 Wesel (DE); Elantas Europe Srl, 43044 Collechio (PR) (IT); BYK Japan KK, Tokyo 162-0845 (JP)
(72) Inventor: HOFFMAN, Ralf-Ludger, 46483 Wesel (DE); SCAGNOLI, Emanuele, 46483 Wesel (DE); KANAFUSA, Yuji, 46483 Wesel (DE)
(74) Representative: Altana IP Department

(57) **Abstract**

The invention relates to a composition comprising
- A diluent or a mixture of diluents
- Dispersed particles, wherein the dispersed particles comprise at least one of an electrically conductive carbon-based material and an electrode active material,

wherein the diluent comprises one or more 3-alkyloxy-N,N-dialkylpropionamide compounds,
wherein the alkyl groups are independently selected from alkyl groups having 1, 2 or 3 carbon atoms.

## Description

The present invention relates to a composition that can be used in the manufacturing of batteries, in particular in the manufacturing of electrodes used in batteries, to a method for the preparation of an electrode for a battery, to an electrode prepared according to the method, to a battery, and to the use of 3-alkyloxy-N,N-dialkylpropionamide, wherein the alkyl groups are independently selected from C1 to C3 alkyl groups, for adjusting the viscosity of a composition comprising dispersed particles.

Rechargeable lithium-ion batteries are commonly used sources of electrical energy for a variety of applications, such as electronic devices and electric vehicles. A lithium-ion battery typically includes a negative electrode, referred to as anode and a positive electrode, referred to a cathode, comprising a cathode-active material. The setup of the battery allows lithium ions and electrons to move to and from the electrodes during charging and discharging. An electrolyte solution or a solid electrolyte in contact with the electrodes provides a conductive medium in which the ions can move. To prevent direct reaction between the electrodes, an ion-permeable separator is used to physically and electrically insulate the electrodes. When the battery is used as an energy source for a device, electrical contact is made to the electrodes, allowing electrons to flow through the device to provide electrical power, and lithium ions to move through the electrolyte from one electrode to the other electrode.

Cathode active materials and compositions comprising them are known in the art.

International patent application WO 2019/236313 A1 describes compositions that can be used in such liquid phase methods. In some examples dispersions of conductive carbon are disclosed, wherein a cellulose derivative, a dispersant additive, and a low amount of a low molecular weight amine are present. In these compositions, N-methylpyrrolidone (NMP) is present as a liquid diluent.

There is an ongoing need to improve battery properties, for example improved chargedischarge cycle stability and enhanced charge/discharge speed. A relevant factor for the charging/discharging speed is the volume resistivity of an electrode in the battery. Volume resistivity is a fundamental specific property of a material that measures its electrical resistance or how strongly it resists electric current. A low resistivity indicates a material that readily allows electric current. Therefore, electrodes having a low volume resistivity generally allow for faster charging and/or discharging of batteries.

In compositions for preparing electrodes NMP is frequently used as liquid diluent to adjust the viscosity of the compositions to a required level. NMP is associated with undesirable effects on health. In many countries the use of NMP is regulated or limited. Hence, there is a desire to use alternative diluents.

The invention seeks to provide a composition which meets the above-mentioned needs.

The invention provides a composition comprising
- A diluent or a mixture of diluents
- Dispersed particles, wherein the dispersed particles comprise at least one of an electrically conductive carbon-based material and an electrode active material,
wherein the diluent comprises one or more 3-alkyloxy-N,N-dialkylpropionamide compounds, wherein the alkyl groups are independently selected from alkyl groups having 1, 2 or 3 carbon atoms.

Surprisingly it has been found that the volume resistivity of the electrode coating is improved, in particular the coating for the cathode, with the composition according to the invention. Moreover, the composition according to the invention does not require the use of NMP, which is an additional advantage in view of industrial hygiene.

The composition comprises dispersed particles of at least one of an electrically conductive carbon-based material and an electrode active material. When the composition is intended for preparing an anode of a battery, the presence of dispersed particles of a carbon-based material is sufficient.

A carbon-based material is a material which consists for 90 to 100 % by weight of carbon. For use in the field of electrode manufacture for batteries, a carbon-based material is selected which is electrically conductive. Examples of suitable electrically conductive carbon-based materials include carbon black, carbon nano tubes, graphite, carbon fibers, graphene, fullerenes, and mixtures thereof. Preferred carbon-based materials are carbon black, graphene, and carbon nano tubes. Specific types of suitable carbon black are furnace black and acetylene black. In typical embodiments, the electrically conductive carbon-based material comprises at least one of carbon nano tubes, carbon black, graphene, fullerene, and carbon fibers.

When the composition is intended for preparing a cathode of a battery, the composition comprises dispersed particles of a cathode active material. In typical embodiments, and in order to improve the electrical conductivity, the composition comprises a cathode active material and an electrically conductive carbon-based material.

In the cathode of a lithium ion rechargeable battery, a transition metal oxide containing lithium, or a lithium metal phosphate, such as LiFePO4, is generally used as a cathode active material, and preferably, an oxide mainly containing lithium and at least one kind of transition metal element selected from the group consisting of Ti, V, Cr, Mn, Fe, Co, Ni, Mo, and W, which is a compound having a molar ratio of lithium to a transition metal element of 0.3 to 2.2, is used. More preferably, an oxide mainly containing lithium and at least one kind of transition metal element selected from the group consisting of V, Cr, Mn, Fe, Co, and Ni, which is a compound having a molar ratio of lithium to a transition metal of 0.3 to 2.2, is used. It should be noted that Al, Ga, In, Ge, Sn, Pb, Sb, Bi, Si, P, B, and the like may be contained in a range of less than 30% by mole with respect to the mainly present transition metal. Of the above-mentioned active materials, it is preferred that at least one kind of material having a spinel structure represented by a general formula LiₓMO₂ (M represents at least one kind of Co, Ni, Fe, and Mn, and x is 0 to 1.2), or Li_{y}N₂O₄ (N contains at least Mn, and y is 0 to 2) be used.

Further, as the cathode active material, there may be particularly preferably used at least one kind of materials each including LiyMaD1-aO2 (M represents at least one kind of Co, Ni, Fe, and Mn, D represents at least one kind of Co, Ni, Fe, Mn, Al, Zn, Cu, Mo, Ag, W, Ga, In, Sn, Pb, Sb, Sr, B, and P with the proviso that the element corresponding to M being excluded, y=0 to 1.2, and a=0.5 to 1) and materials each having a spinel structure represented by Liz (NbE1-b) 204 (N represents Mn, E represents at least one kind of Co, Ni, Fe, Mn, Al, Zn, Cu, Mo, Ag, W, Ga, In, Sn, Pb, Sb, Sr, B and P, b=1 to 0.2, and z=0 to 2).

Specifically, there are exemplified LixCoO2, LixNiO2, LixMnO2, LixCoaNi1-aO2, LixCobV1-bOz, LixCobFe1-bO2, LixMn2O4, LixMncCo2-cO4, LixMncNi2-cO4, LixMncV2-cO4, and LixMncFe2-cO4 (where, x=0.02 to 1.2, a=0.1 to 0.9, b=0.8 to 0.98, c=1.6 to 1.96, and z=2.01 to 2.3). As the most preferred transition metal oxide containing lithium, there are given LixCoO2, LixNiO2, LixMnO2, LixCoaNi1-aO2, LixMn2O4, and LixCobV1-bOz (x=0.02 to 1.2, a=0.1 to 0.9, b=0.9 to 0.98, and z=2.01 to 2.3). It should be noted that the value of x may increase and decrease in accordance with charge and discharge.

A lithium iron phosphate-based cathode active material may be represented by the following Formula I:

Li₁₊ₐFe₁₋ₓMₓPO_{4-b}A_{b}

In Formula , M represents at least one from the group consisting of manganese (Mn), nickel (Ni), cobalt (Co), copper (Cu), scandium (Sc), titanium (Ti), chromium (Cr), vanadium (V), and zinc (Zn), A represents at least one selected from the group consisting of sulfur (S), selenium (Se), fluorine (F), chlorine (CI), and iodine (I), a is in the range of -0.5 to 0.5, x is in the range of 0.0 to 0.5, and b is in the range of 0.0 to 0.1.

In some embodiments, the lithium iron phosphate-based cathode active material is represented by the formula LiFePO4. It is a natural mineral of the olivine family (triphylite). LiFePO4 was identified as a cathode material belonging to the polyanion class for use in batteries. Because of its low cost, non-toxicity, the natural abundance of iron, its excellent thermal stability, safety characteristics, electrochemical performance, and specific capacity it has gained considerable market acceptance.

Lithium Manganese Iron Phosphate (LiMnₓFe₍₁₋ₓ₎PO₄) is a new, higher nominal voltage variation of Lithium Iron Phosphate (LFP) with rising popularity.

Although the average particle size of the cathode active material is not particularly limited, the size is preferably 0.1 to 50 µm. It is preferred that the volume of the particles of 0.5 to 30 µm be 95% or more. It is more preferred that the volume occupied by the particle group with a particle diameter of 3 µm or less be 18% or less of the total volume, and the volume occupied by the particle group of 15 µm or more and 25 µm or less be 18% or less of the total volume.

Although the specific area is not particularly limited, the area is preferably 0.01 to 50 m²/g, particularly preferably 0.2 m²/g to 1 m²/g by a BET method.

In typical embodiments, the cathode active material comprises at least one of lithium iron phosphate, lithium cobalt oxide, lithium manganese oxide, lithium nickel manganese cobalt oxide, and lithium manganese iron phosphate.

The composition according to the invention comprises as essential component a diluent which comprises one or more 3-alkyloxy-N,N-dialkylpropionamide compounds, wherein the alkyl groups are independently selected from alkyl groups having 1, 2 or 3 carbon atoms. The diluent general provides a continuous liquid phase in the composition, wherein particles are dispersed. The diluent can also be used to adjust the viscosity of the composition to a desired level. Examples of suitable 3-alkyloxy-N,N-dialkylpropionamide compounds include 3-n-propoxy-N,N-di-n-propylpropionamide, 3-iso-propoxy-N,N-di-iso-propylpropionamide, 3-ethoxy-N,N-din-propylpropionamide, 3-ethoxy-N,N-di-iso-propylpropionamide, 3-methoxy-N,N-di-n-propylpropionamide, 3-methoxy-N,N-di-iso-propylpropionamide, 3-n-propoxy-N,N-diethylpropionamide, 3-iso-propoxy-N,N-diethylpropionamide, 3-n-propoxy-N,N-dimethylpropionamide, 3-iso-propoxy-N,N-dimethylpropionamide, 3-ethoxy-N,N-di-ethylpropionamide, 3-ethoxy-N,N-dimetylpropionamide, 3-methoxy-N,N-diethylpropionamide, and 3-methoxy-N,N-dimethylpropionamide.

A preferred diluent is 3-methoxy-N,N-dimethylpropionamide. So far very good results have been obtained with compositions comprising this diluent. Moreover, this diluent is commercially available. A further advantage of 3-methoxy-N,N-dimethylpropionamide is that the enthalpy of vaporization, determined at atmospheric pressure, of this compound is about 20 % lower than the enthalpy of vaporization of N-methyl pyrrolidone, which is a commonly used diluent for compositions for manufacturing electrodes for batteries. Therefore, the use of 3-methoxy-N,N-dimethylpropionamide in such compositions reduces the energy required to evaporate diluent in the process of electrode manufacturing.

Suitably, the composition comprises from 5 to 80 wt%, based on the weight of the total composition, of one or more 3-alkyloxy-N,N-dialkylpropionamide compounds, wherein the alkyl groups are independently selected from alkyl groups having 1, 2 or 3 carbon atoms. If the content of 3-alkyloxy-N,N-dialkylpropionamide compounds in the composition is below 5 wt%, the viscosity of the composition may be too high, and the beneficial effect of lowering the volume resistance does not ensue. If the content of 3-alkyloxy-N,N-dialkylpropionamide compounds exceeds 80 wt%, the content of dispersed particles may be too low for efficient manufacturing of electrodes.

In further embodiments, less than 75 wt.%, 70 wt.%, 65 wt.% or 50 wt.%, based on the total weight of the composition, of 3-alkyloxy-N,N-dialkylpropionamide compounds are present in the composition. In preferred embodiments, the composition comprises at least 10 wt%, or at least 15 wt%, or at least 20 wt%, based on the weight of the total composition, of one or more 3-alkyloxy-N,N-dialkylpropionamide compounds.

In preferred embodiments, the composition of the invention is a liquid or in the form of a paste or slurry at a temperature of 25 °C.

The invention also relates to the use of 3-alkyloxy-N,N-dialkylpropionamide, wherein the alkyl groups are independently selected from alkyl groups having 1, 2 or 3 carbon atoms, for adjusting the viscosity of a composition comprising dispersed particles comprising at least one of an electrically conductive carbon-based material and an electrode active material.

The composition of the invention preferably further comprises an organic binder polymer. The binder polymer improves the adhesion between the electrode active material particles and the adhesion between the electrode active material and a current collector. Examples of the binder include known binders such as: fluorine-based polymers such as polyvinylidene fluoride, polyvinylidene fluoride-hexafluoropropylene copolymer, and polytetrafluoroethylene; rubber-based binders such as styrene-butadiene rubber (SBR), acrylonitrile-butadiene rubber (NBR), hydrogenated nitrile-butadiene rubber (HNBR), ethylene-propylene-diene monomer rubber (EPDM), a sulfonated EPDM, and a fluorine rubber; polyethylene; polypropylene; polyvinyl alcohol; polyvinylpyrrolidone, polyacrylonitrile; carboxymethyl cellulose (CMC); starch; hydroxypropyl cellulose; regenerated cellulose; and binders based on polyacrylates.

The appropriate amount of the binder generally is in the range of 1 to 50 parts by mass, preferably 1.5 to 20 parts by mass, in terms of 100 parts by mass of the non-volatile material of the composition.

Generally, the 3-alkyloxy-N,N-dialkylpropionamide compounds, wherein the alkyl groups are independently selected from alkyl groups having 1, 2 or 3 carbon atoms, act as solvents for the binder polymer.

In typical embodiments, the 3-alkyloxy-N,N-dialkylpropionamide compounds, wherein the alkyl groups are independently selected from alkyl groups having 1, 2 or 3 carbon atoms, is the main or only diluent present in the composition. If so desired, it is possible include other diluents or solvents. Generally, an organic solvent is selected that is capable of dissolving the polymeric or oligomeric components of the composition. The organic solvent may also comprise more than one type of organic solvent, for example a mixture of two or more types of solvents. Examples of suitable solvents include ester solvents, such as methyl acetate, ethylacetate, γ-butyrolactone, and ε-caprolactone; an ether-based solvent such as dibutyl ether or tetrahydrofuran; a ketone-based solvent such as cyclohexanone; an aromatic hydro- carbon-based solvent such as benzene, toluene, and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a doublebond aromatic ring or ether bond); amides such as dimethylformamide; dioxolanes such as 1,3-dioxolane; or sulfolanes may be used as the organic solvent. Examples of further suitable solvents include aprotic dipolar solvents, such as dimethyl sulfoxide, dimethyl formamide or N-methyl pyrrolidone, or other solvents comprising an amide group. In the case of using water as a solvent, it may be preferred to use further include a thickener. The amount of the solvent is adjusted so as to obtain a viscosity at which a composition can be applied to a collector easily.

One or more dispersing agents which are different from the binder polymer are optionally present in the composition according to the present invention. Dispersing agents for the solid particles present in the composition can reduce the viscosity of the composition. As a consequence, the amount of diluent can be reduced to achieve a target viscosity. Dispersing agents can improve the dispersion of conductive material and enhance the conductivity of the electrode. Dispersing agents can support the dispersion of electrode active material or electrically conductive carbon-based material in several aspects. They can support the wetting of surface of the solid particles with the liquid phase, support the separation of agglomerates into smaller particles, and stabilize dispersed particles in the continuous liquid phase. Dispersing agents suitably have one or more anchoring groups capable of absorbing onto a particles surface, and a polymeric or non-polymeric segment capable of being dissolved in the continuous liquid phase. Polymeric dispersing agents may be linear polymers, branched polymers, as well as comb polymers. Suitably, anchoring groups are linked to the polymeric or non-polymeric segments of the dispersing agent. Examples of suitable anchoring groups include amine groups, in particular tertiary amine groups, phosphoric acid groups, carboxylic acid groups, sulfonic acid groups, as well as salts of the aforementioned groups. It is also possible to use a combination of two or more types of dispersing agents.

The composition of the invention can be used with great advantage for preparing an electrode slurry or paste for a rechargeable battery.

Therefore, the invention further relates to a method for the preparation of an electrode for a battery, wherein a collector substrate is coated with the composition.

The composition for an electrode can be obtained by mixing the components of the composition, for example by using known mixing equipment, or by kneading. A known device such as a ribbon mixer, a screw-type kneader, a Spartan Granulator, a Loedige Mixer, a planetary mixer, or a universal mixer may be used. The composition for an electrode may be formed into a sheet shape, a pellet shape, or the like.

An electrode may be formed of a molding of the above-mentioned composition for an electrode. The electrode is obtained, for example, by applying the composition for an electrode to a collector, followed by drying and pressure molding.

Examples of the collector include foils and mesh of aluminum, nickel, copper, stainless steel and the like. The coating thickness of the slurry is generally 40 to 200 µm. There is no particular limitation to the slurry coating method, and an example of the coating method includes a method involving coating with a doctor blade or a bar coater, followed by molding with roll pressing or the like.

Examples of the pressure molding include roll pressure molding, compression molding, and the like. The pressure for the pressure molding is preferably about 1 to 6 t/cm². As the density of the electrode increases, the battery capacity per volume generally increases. However, if the electrode density is increased too much, the cycle characteristic is generally degraded. If the slurry for an electrode in a preferred embodiment of the present invention is used, the degradation in the cycle characteristic is small even when the electrode density is increased. Generally, the electrode density is in the range of 1.0 to 4.0 g/cm³. In some embodiments, the electrode density of a cathode is in the range of 2.0 to 3.5 g/cm³, and the density of an anode is in the range of 1.2 to 2.0 g/cm³.

The invention further relates to an electrode comprising a coating obtainable by treating a collector with the composition of the invention.

As mentioned above, the electrode prepared from the composition according to the invention exhibit a reduced volume resistivity. Therefore, the invention also relates to the use of the composition according for reducing the volume resistivity of an electrode prepared from the composition.

In a still further embodiment, the invention relates to a battery, preferably a rechargeable battery, comprising said electrode.

A rechargeable battery can be produced, using an electrode as a constituent element, preferably as a cathode. The term cathode designates the electrode where reduction is taking place during the discharge cycle.

The expression battery encompasses a single electrochemical cell that contains electrodes, a separator, and an electrolyte, as well as a collection of cells or cell assemblies.

The rechargeable battery in a preferred embodiment of the present invention is described by taking a lithium ion rechargeable battery as a specific example. The lithium ion rechargeable battery has a structure in which an anode and a cathode are soaked in an electrolyte. A separator may be provided between a cathode and anode. Examples of the separator include non-woven fabric, cloth, and a microporous film each mainly containing polyolefin such as polyethylene and polypropylene, a combination thereof, and the like.

As an electrolyte forming the lithium-ion rechargeable battery in a preferred embodiment of the present invention, a known organic electrolyte, inorganic solid electrolyte, and polymer solid electrolyte may be used, but an organic electrolyte is preferred in terms of ionic conductivity.

As a solvent of the organic electrolyte (non-aqueous solvent), preferred is a solution of an organic solvent such as: an ether such as diethyl ether, dibutyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol dimethyl ether, or ethylene glycol phenyl ether; an amide such as formamide, N-methylformamide, N,N-dimethylformamide, N-ethylformamide, N,N-diethylformamide, N-methylacetamide, N,N-dimethylacetamide, N-ethylacetamide, N,N-diethylacetamide, N,N-dimethylpropionamide, or hexamethylphosphorylamide; a sulfurcontaining compound such as dimethylsulfoxide or sulfolane; a dialkyl ketone such as methyl ethyl ketone or methyl isobutyl ketone; a cyclic ether such as ethylene oxide, propylene oxide, tetrahydrofuran, 2-methoxytetrahydrofuran, or 1,3-dioxolan; a carbonate such as ethylene carbonate or propylene carbonate; γ-butyrolactone; N-methylpyrrolidone; acetonitrile; nitromethane, 1,2-dimethoxyethane; or the like. Further, there are preferably exemplified: carbonates such as ethylene carbonate, butylene carbonate, diethyl carbonate, dimethyl carbonate, methyl ethyl carbonate, propylene carbonate, vinylene carbonate, and esters such as γ-butyrolactone; ethers such as dioxolan, diethyl ether, and diethoxyethane; dimethylsulfoxide; acetonitrile; tetrahydrofuran; and the like. A carbonate-based non-aqueous solvent such as ethylene carbonate or propylene carbonate may be particularly preferably used. One kind of those solvents may be used alone, or two or more kinds thereof may be used as a mixture.

A lithium salt is used for a solute (electrolyte) of each of those solvents. Examples of a generally known lithium salt include LiClO4, LiBF4, LiPF6, LiAlCl4, LiSbF6, LiSCN, LiCI, LiCF3SO3, LiCF3CO2, LiN(CF3SO2)2, and the like.

Examples of the polymer solid electrolyte include a polyethylene oxide derivative, a polypropylene oxide derivative, a phosphoric acid ester polymer, a polycarbonate derivative, and the like.

### EXAMPLES

In the examples the following ingredients were used

| | |
|---|---|
| NMP | N-methylpyrrolidone |
| NDM | 3-methoxy-N,N-dimethylpropionamide |
| CNT | FT7320 acid purified carbon nano tubes |
| disp.1 | A dispersing agent comprising polymerized units of N-vinyl lactam and a comb polymer |
| disp.2 | A dispersing agent comprising a polymer and an amine |
| NCM | Lithium-nickel-manganese-cobalt-oxide |
| PVDF | Ultra high viscosity grade polyvinylidene fluoride thermoplastic polymer |
| | |

### Example 1

A first composition was obtained by mixing for 10 minutes in a Dispermat CV at 1000rpm, of 18,3 parts by weight (pbw) of a 12% solution of PVDF in NDM, 60,9 pbw of NDM, and 107 pbw of NCM powder. This first composition was mixed with 13,8 pbw of a second composition, that was obtained by mixing for 10 minutes in a Dispermat CV at 1000rpm, 8 pbw of CNT, 10 pbw of disp.1, and 182 pbw of NDM.

Composition A was obtained.

### Example 2

A first composition was obtained by mixing for 10 minutes in a Dispermat CV at 1000rpm, of 18,3 parts by weight (pbw) of a 12% solution of PVDF in NDM, 60,9 pbw of NDM, and 107 pbw of NCM powder. This first composition was mixed with 13,8 pbw of a second composition, that was obtained by mixing for 10 minutes in a Dispermat CV at 1000rpm, 8 pbw of CNT, 13,3 pbw of disp.2, and 179 pbw of NDM.

Composition B was obtained.

### Example 3 (Comparative Example)

A first composition was obtained by mixing for 10 minutes in a Dispermat CV at 1000rpm, of 18,3 parts by weight (pbw) of a 12% solution of PVDF in NMP, 60,9 pbw of NMP, and 107 pbw of NCM powder. This first composition was mixed with 13,8 pbw of a second composition, that was obtained by mixing for 10 minutes in a Dispermat CV at 1000rpm, 8 pbw of CNT, 10 pbw of disp.1, and 182 pbw of NMP.

Composition C was obtained.

### Example 4 (Comparative Example)

A first composition was obtained by mixing for 10 minutes in a Dispermat CV at 1000rpm, of 18,3 parts by weight (pbw) of a 12% solution of PVDF in NMP, 60,9 pbw of NMP, and 107 pbw of NCM powder. This first composition was mixed with 13,8 pbw of a second composition, that was obtained by mixing for 10 minutes in a Dispermat CV at 1000rpm, 8 pbw of CNT, 13,3 pbw of disp.2, and 179 pbw of NMP.

Composition D was obtained.

### Example 5

A cathode material for a lithium-ion battery was coated with each of the compositions A - D. After evaporation of the solvent the appearance of the coated electrodes was inspected and the volume resistivity was measured.

The results are summarized in Table 1

| Composition | Visual appearance of coated electrode | Coating | | Volume resistivity Ω cm |
|---|---|---|---|---|
| | | Adhesion | Thickness µm | |
| 1 | Good | Good | 74 | 9.6 |
| 2 | Good | Good | 74 | 9.6 |
| 3* | Good | Good | 79 | 31.8 |
| 4* | Good | Good | 78 | 26.7 |

| | | | | |
|---|---|---|---|---|
| *) Comparative example | | | | |

From Table 1 it can be inferred that the electrodes prepared from compositions according to the invention have a significantly lower volume resistivity than electrodes prepared from comparative compositions, wherein NMP was used as diluent. Other properties of the inventive and comparative electrodes are on the same level.

## Claims

1. A composition comprising
- A diluent or a mixture of diluents
- Dispersed particles, wherein the dispersed particles comprise at least one of an electrically conductive carbon-based material and an electrode active material,
wherein the diluent comprises one or more 3-alkyloxy-N,N-dialkylpropionamide compounds, wherein the alkyl groups are independently selected from alkyl groups having 1, 2 or 3 carbon atoms.

2. The composition according to claim 1, wherein the composition comprises from 5 to 80 wt%, based on the weight of the total composition, of one or more 3-alkyloxy-N,N-dialkylpropionamide compounds, wherein the alkyl groups are independently selected from alkyl groups having 1, 2 or 3 carbon atoms.

3. The composition according to claim 1 or 2, wherein the 3-alkyloxy-N,N-dialkylpropionamide is 3-methoxy-N,N-dimethylpropionamide.

4. The composition according to any one of the preceding claims, wherein the composition further comprises an organic binder polymer.

5. The composition of claim 4, wherein the organic binder polymer comprises at least one of fluorine-based polymers, such as polyvinylidene fluoride, polyvinylidene fluoride-hexafluoropropylene copolymer, and polytetrafluoroethylene; rubber-based binders such as styrene-butadiene rubber (SBR), acrylonitrile-butadiene rubber (NBR), hydrogenated nitrile-butadiene rubber (HNBR), ethylene-propylene-diene monomer rubber (EPDM), a sulfonated EPDM, and a fluorine rubber; polyethylene; polypropylene; polyvinyl alcohol; polyvinylpyrrolidone, polyacrylonitrile; carboxymethyl cellulose (CMC); starch; hydroxypropyl cellulose; regenerated cellulose; and binder based on polyacrylates.

6. The composition according to any one of the preceding claims, wherein the electrically conductive carbon-based material comprises at least one of carbon nano tubes, carbon black, graphene, fullerene, and carbon fibers.

7. The composition according to any one of the preceding claims, wherein the electrode active material is a cathode active material and comprises at least one of lithium iron phosphate, lithium cobalt oxide, lithium manganese oxide, lithium nickel manganese cobalt oxide, and lithium manganese iron phosphate.

8. The composition of any one of the preceding claims, wherein the composition contains at least 10 wt.%, based on the weight of the total composition, of 3-alkyloxy-N,N-dialkylpropionamide, wherein the alkyl groups are independently selected from C1 to C3 alkyl groups.

9. The composition of any one of the preceding claims, wherein the composition contains less than 70 wt.%, based on the weight of the total composition, of 3-alkyloxy-N,N-dialkylpropionamide, wherein the alkyl groups are independently selected from alkyl groups having 1, 2 or 3 carbon atoms.

10. The composition according to any one of the preceding claims, wherein the composition further comprises at least one dispersing agent, which is different from the organic binder polymer.

11. A method for the preparation of an electrode for a battery, wherein a collector substrate is coated with the composition of any of claims 1 to 10.

12. An electrode comprising a coating obtainable by treating a collector with the composition of any of claims 1 to 10.

13. A battery comprising an electrode according to claim 12.

14. Use of 3-alkyloxy-N,N-dialkylpropionamide, wherein the alkyl groups are independently selected from alkyl groups having 1, 2 or 3 carbon atoms, for adjusting the viscosity of a composition comprising dispersed particles comprising at least one of an electrically conductive carbon-based material and an electrode active material.

15. Use of a composition according to any one of the preceding claims 1 to 10 for reducing the volume resistivity of an electrode prepared from the composition.
